# EUROPEAN PATENT APPLICATION

(11) **EP 4 819 327 A1**
(43) Date of publication of application: **07.10.2026**
(21) Application number: 26150181.1
(22) Date of filing: 05.01.2026
(51) Int. Cl.: H01M 50/213, H01M 50/244, H01M 50/24, H01M 50/367, H01M 50/383, H01M 50/507, H01M 50/264

(54) **BATTERY PACK**

(30) Priority: 02.04.2025 KR 20250042857
(71) Applicant: SAMSUNG SDI CO., LTD., Yongin-si, Gyeonggi-do 17084 (KR)
(72) Inventor: KANG, Il Oh, 16678 Suwon-si (KR)
(74) Representative: Marks & Clerk LLP

(57) **Abstract**

A battery pack comprising:

- a housing (1);

- a plurality of battery cells (2) accommodated in the housing;

- a bus bar electrically connecting the plurality of battery cells;

- a case (4) mounted on the housing and supporting a battery cell of the plurality of battery cells;

- a first space (5) between the battery cell and the case and which provides a space to discharge a gas; and

- a second space (6) between the case and the housing.

## Description

### BACKGROUND

### 1. Field

The present disclosure relates to a battery pack.

### 2. Description of the Related Art

In general, as demand for portable electronic products, such as laptops, video cameras, and portable phones, increases rapidly and commercialization of robots, electric vehicles, and the like begins in earnest, research on high-performance secondary batteries capable of repeated charging and discharging is being actively conducted. In particular, since lithium secondary batteries have high energy density and operating voltage, and excellent preservation and lifetime characteristics, the lithium secondary batteries are widely used as energy sources for various electronic products.

Lithium secondary batteries are batteries that include a positive electrode and a negative electrode containing active materials capable of intercalation and deintercalation of lithium ions and an electrolyte, and the lithium secondary batteries generate electrical energy through oxidation and reduction reactions when lithium ion is intercalated/deintercalated into/from the positive and negative electrodes.

The above-described information disclosed in the background technology of the present disclosure is provided to improve understanding of the background of the present disclosure and may include information that does not constitute the related art.

### SUMMARY

According to an aspect of embodiments of the present disclosure, a battery pack capable of suppressing the gas discharge resistance caused by ignition of a battery cell is provided.

However, aspects and technical problems to be solved by the present disclosure are not limited to the above-described aspects and problems to be solved, and other aspects and problems to be solved which are not mentioned, will be clearly understood by those skilled in the art from the description of the invention disclosed below.

According to a first aspect of the present disclosure, a battery pack includes: a housing; a plurality of battery cells disposed inside or accommodated in the housing; a bus bar electrically connecting a plurality of the battery cells; a case mounted on the housing and supporting a battery cell of the plurality of battery cells; a first space between, e.g. which is formed between, the battery cell and the case and which provides a space to discharge a gas; and a second space between, e.g. formed between, the case and the housing.

The housing may include: a housing body; a housing cover covering an open portion of the housing body; and a housing frame on, e.g. formed on, the housing body to induce mounting of the case.

The case may include: a case base part supported by the housing; and a case support part connected to the case base part and supporting the plurality of battery cells.

The case base part may include: a base seating portion seated on the housing; and a base protrusion protruding from the base seating portion in a first direction.

The case support part may include: a support side cover connected to the case base part and covering the battery cells in a row; a support protrusion connected to the support side cover and supporting a lower portion of the battery cell; and a support plate that is coupled to the support protrusion, spaced apart from the battery cell, and breakable to discharge a gas discharged from the battery cell.

A vent of the battery cell may be disposed or located inside the support protrusion.

A thickness of the support protrusion may be greater than a distance, e.g. height, of the first space.

The support protrusion may support the plurality of battery cells in a row.

The support protrusion may include: a protrusion plate connected to the support side cover; and one or more protrusion rings on, e.g. formed on, the protrusion plate, with the support plate formed inside, and supporting a lower portion of each of the battery cells disposed or arranged in a plurality of rows.

The support protrusion may further include one or more protrusion grooves formed in the protrusion plate, located along a circumference of the protrusion ring, and configured to allow a gas to flow in and out.

The protrusion groove may be arranged within a range of 45 degrees to 360 degrees in a circumferential direction along the circumference of the protrusion ring.

The support plate may include: a plate cover portion coupled to the support protrusion and spaced apart from the battery cell; and a plate vent portion in, e.g. formed in, the plate cover portion, disposed or located in a gas discharge area of the battery cell, and configured to be broken by a gas pressure to discharge the gas.

A thickness of the plate cover portion may be greater than a thickness of the plate vent portion.

The plate vent portion may be formed in any of a cross shape, a concentric circle shape, a spoke shape, or a grid pattern shape.

The battery pack may further include a fire extinguishing part in, e.g. disposed in, at least one of the first space and the second space and configured to suppress ignition of the battery cell.

The fire extinguishing part may include: a fire extinguishing sheet including a fire extinguishing agent therein; and a fire extinguishing tape on, e.g. formed on, the fire extinguishing sheet.

A thickness of the fire extinguishing sheet may be greater than a thickness of the fire extinguishing tape.

The fire extinguishing sheet may include: a sheet body to which the fire extinguishing tape is attached; and a plurality of sheet capsules embedded in the sheet body and including the fire extinguishing agent.

The sheet body may be formed by mixing epoxy and additives.

A content ratio of a sheet capsule of the plurality of sheet capsules may be 30% to 50%.

According to aspects of the present disclosure, a battery pack having an improved structure may be provided.

According to another aspect of the present disclosure, a vehicle including the battery pack of the first aspect is provided.

At least some of the above and other features of the invention are set out in the claims.

### BRIEF DESCRIPTION OF THE DRAWINGS

The following drawings attached to this specification illustrate some embodiments of the present invention and, together with the detailed description of the invention to be described below, are provided to facilitate understanding of the technical ideas of the present invention; however, the present invention is not to be construed as being limited to matters described in the drawings, in which:
FIG. 1 is a perspective view schematically illustrating a battery pack according to an embodiment of the present invention;
FIG. 2 is a view schematically illustrating a connection relationship between a battery cell and a busbar in the battery pack according to an embodiment of the present invention;
FIG. 3 is a cross-sectional view schematically illustrating a state in which the battery cell is disposed in the battery pack according to an embodiment of the present invention;
FIG. 4 is a perspective view schematically illustrating the battery cell according to an embodiment of the present invention;
FIG. 5 is a cross-sectional view schematically illustrating the battery cell according to an embodiment of the present invention;
FIG. 6 is a view schematically showing a housing according to an embodiment of the present invention;
FIG. 7 is a plan view schematically illustrating a case according to an embodiment of the present invention;
FIG. 8 is a cross-sectional view schematically illustrating the case according to an embodiment of the present invention;
FIG. 9 is an enlarged view of a main part of the case according to an embodiment of the present invention;
FIG. 10 is a plan view schematically illustrating a support plate according to an embodiment of the present invention;
FIG. 11 is a plan view schematically illustrating a support plate according to another embodiment of the present invention;
FIG. 12 is a plan view schematically illustrating a support plate according to another embodiment of the present invention;
FIG. 13 is a plan view schematically illustrating a support plate according to another embodiment of the present invention;
FIG. 14 is a view schematically illustrating a support protrusion according to another embodiment of the present invention;
FIG. 15 is a view schematically illustrating a state in which a fire extinguishing part is disposed according to an embodiment of the present invention;
FIG. 16 is a side view schematically illustrating the fire extinguishing part according to an embodiment of the present invention; and
FIG. 17 is a view schematically illustrating a fire extinguishing sheet according to an embodiment of the present invention.

### DETAILED DESCRIPTION

Herein, some embodiments of the present invention will be described in further detail with reference to the attached drawings. The terms or words used in the present specification and claims are not to be limitedly interpreted as having general or dictionary meanings and are to be interpreted as having meanings and concepts that are consistent with the technical idea of the present disclosure on the basis of the principle that an inventor can be his/her own lexicographer to appropriately define concepts of terms to describe his/her invention in the best way. Accordingly, the embodiments disclosed in the present specification and configurations shown in the drawings are only some example embodiments of the present disclosure and do not necessarily represent the entire technical scope of the present disclosure, and it is to be understood that there may be various equivalents and modifications which may replace the example embodiments at the time of filing the present application.

Further, when used in the present specification, "comprise" or "include" and/or "comprising" or "including" specify the presence of mentioned shapes, numbers, steps, operations, members, elements, and/or groups thereof, and do not exclude the presence or addition of one or more other shapes, numbers, steps, operations, members, elements, and/or groups thereof.

Further, to facilitate understanding of the present disclosure, the accompanying drawings may not be drawn to actual scale, and the sizes of some components may be exaggerated. In addition, the same reference numerals may be given to the same components in different embodiments.

The mention that two objects to be compared are "the same" means that that the two objects are the same or substantially the same. Accordingly, "the same" or "substantially the same" may include a deviation considered as a low level in the art, for example, a deviation within 5%. Further, uniformity of a parameter in a certain region may mean uniformity from an average point of view.

Although "first," "second," and the like are used to describe various components, it is to be understood that these components are not limited by these terms. These terms are used to distinguish one component from another component, and unless otherwise stated, it is to be understood that the first component may be the second component.

Throughout the specification, unless otherwise stated, each component may be singular or plural.

The placement of an arbitrary component on the "upper portion (or lower portion)" of a component or "above (or below)" of a component may mean not only that the arbitrary component is disposed in contact with an upper surface (or a lower surface) of the component, but also that another component may be interposed between the component and the arbitrary component disposed above (or below) the component.

Further, when it is disclosed that a certain component is "on," "connected to," or "coupled to" another component, it is to be understood that the components may be directly connected or coupled to each other, but also that another component may be "interposed" between the components, or the components may be "connected," "coupled," or "linked" through another component.

As used in the present specification, the term "and/or" includes any one or more and all combinations of the related listed items. Further, when embodiments of the present disclosure are described, the use of "may" relates to "one or more embodiments of the present disclosure." The term such as "one or more" before a list of elements modifies an entire list of the elements and does not modify individual elements in the list.

Throughout the specification, "A and/or B" means to A, B, or A and B unless otherwise stated, and "C to D" means greater than or equal to C and less than or equal to D unless otherwise specified.

When phrases such as "at least one of A, B, and C," "at least one of A, B, or C," "at least one selected from group A, B, and C," or "at least one selected from A, B, and C" are used to specify a list of elements A, B, and C, the phrases may refer to any one of all suitable combinations.

The term "use" may be considered to be synonymous with the term "utilize." As used in the present specification, the terms "substantially," "about," and other similar terms are used as terms of approximation rather than terms of degrees, and are intended to consider an inherent variation in measured or calculated values to be recognized by those skilled in the art.

Although the terms "first," "second," "third," and the like may be used in the present specification to describe various elements, components, regions, layers, and/or sections, these elements, components, regions, layers, and/or sections are not to be limited by these terms. These terms are used to distinguish one element, component, region, drawing layer, or section from another element, component, region, drawing layer, or section. Accordingly, a first element, component, region, layer, or section to be described below may be referred to a second element, component, region, layer, or section without departing from the teachings of the present disclosure.

Spatially related terms such as "beneath," "below," "lower," "above," and "upper" are used for easy description of the relationship of one element or feature to another element or feature shown in the drawings. These spatially related terms are provided for easy understanding of the present disclosure according to various process states or usage states of the present disclosure, and are not intended to limit the present disclosure. For example, when the elements or features in the drawings are reversed, an element described as "lower" or "below" "becomes "upper" or "above." Accordingly, "below" is a concept encompassing "above" or "below."

The terms used in the present specification are intended to describe the embodiments of the present disclosure, and are not intended to limit the present disclosure.

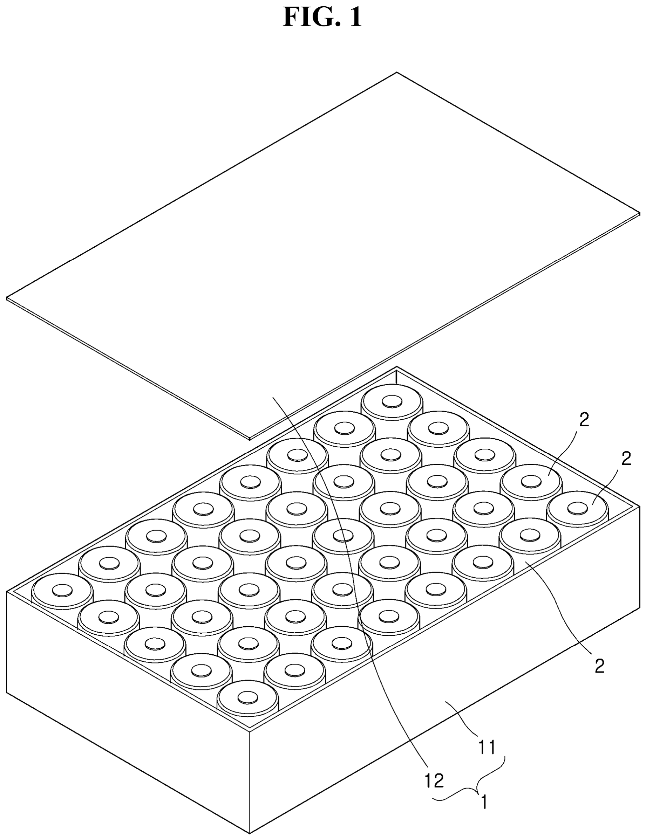

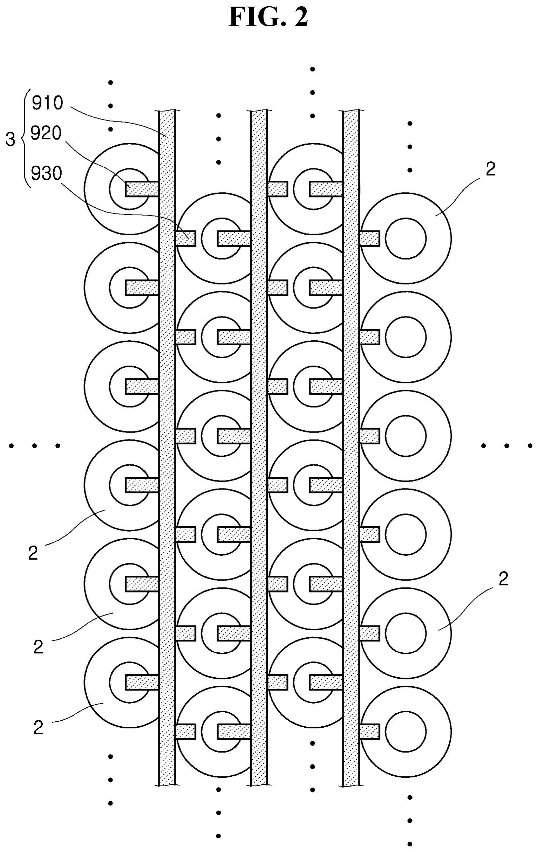

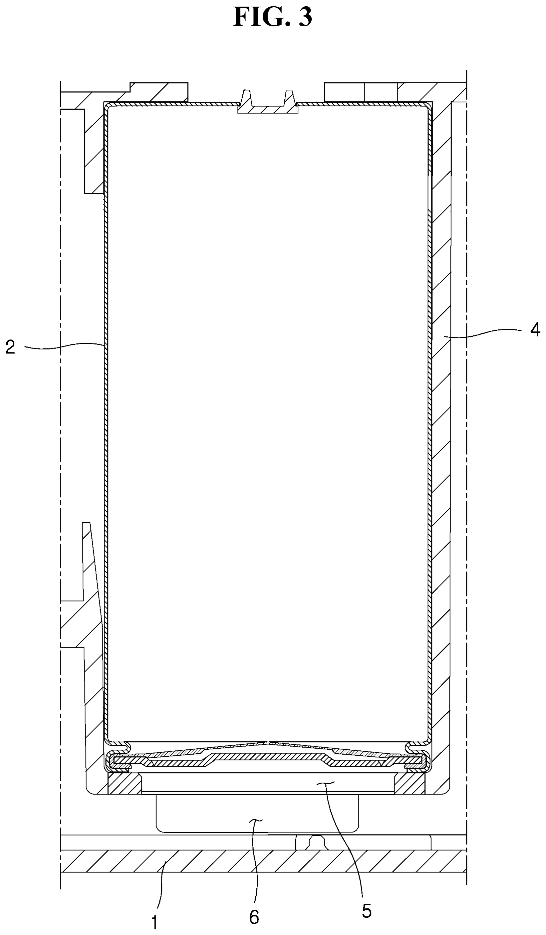

FIG. 1 is a perspective view schematically illustrating a battery pack according to an embodiment of the present invention. FIG. 2 is a view schematically illustrating a connection relationship between a battery cell 2 and a bus bar 3 in the battery pack according to an embodiment of the present invention. FIG. 3 is a cross-sectional view schematically illustrating a state in which the battery cell 2 is disposed in the battery pack according to an embodiment of the present invention. Referring to FIGS. 1 to 3, the battery pack according to an embodiment of the present invention includes a housing 1, a battery cell 2, a bus bar 3, a case 4, a first space 5, and a second space 6.

The housing 1 may generally form an exterior of the battery pack and provide a space in which the battery cell 2 may be accommodated.

The battery cell 2 may function as a unit structure for storing and supplying power in the battery pack.

A plurality of battery cells 2 may be provided. The plurality of battery cells 2 may be disposed inside the housing 1 in any of various patterns, such as any of a grid shape, a zigzag shape, and the like. The plurality of battery cells 2 may be disposed parallel to each other. A number of the battery cells 2 may be varied in various ways depending on a size, shape, and the like of the housing 1. A configuration of the secondary battery will be described below.

The bus bar 3 may electrically connect the plurality of battery cells 2 to each other. The plurality of battery cells 2 may be connected by the bus bar 3 in series or in parallel. For example, the bus bar 3 may connect the battery cells 2 disposed in a same row in parallel with each other, and connect the battery cells 2 disposed in two adjacent rows in series with each other in the housing 1. The bus bar 3 may be formed of an electrically conductive material, such as copper, aluminum, nickel, or the like.

The bus bar 3 according to an embodiment may include a main bus bar 910, a first branch bus bar 920, and a second branch bus bar 930.

The main bus bar 910 may be disposed between rows of neighboring battery cells 2. A plurality of main bus bars 910 may be provided. The main bus bars 910 may extend in a straight line between the rows of battery cells 2, or may be regularly bent in a zigzag shape. The plurality of main bus bars 910 may be individually disposed between different rows of neighboring battery cells 2. The plurality of main bus bars 910 may be electrically connected to each other.

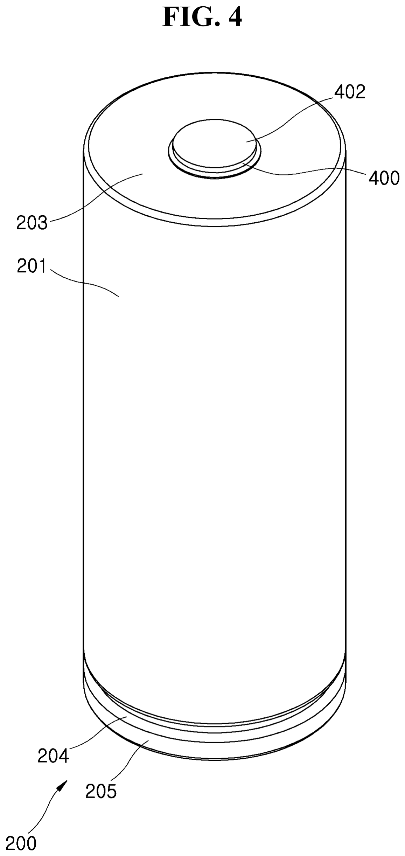

The first branch bus bar 920 may extend from the main bus bar 910 to a terminal 400 (see e.g. FIG. 4) of the battery cell 2 described below. The first branch bus bar 920 may be mechanically and electrically connected to the terminal 400 by laser welding, ultrasonic welding, or the like. A plurality of first branch bus bars 920 may be provided. The plurality of first branch bus bars 920 may be individually connected to different terminals 400.

The second branch bus bar 930 may extend from the main bus bar 910 to a cell cover 200 of the battery cell 2 described below. The second branch bus bar 930 may be mechanically and electrically connected to the cell cover 200 by laser welding, ultrasonic welding, or the like. A plurality of second branch bus bars 930 may be provided. The plurality of second branch bus bars 930 may be individually connected to the cell covers 200 of different battery cells 2.

The case 4 may be mounted on the housing 1 and may support the battery cell 2. The case 4 may support the battery cell 2 such that the housing 1 and the battery cell 2 are spaced apart from each other.

The first space 5 is formed between the battery cell 2 and the case 4, and may provide a space for discharging gas. An edge of the battery cell 2 is seated on the case 4, and a space between a lower portion of the battery cell 2 and the case 4 may form the first space 5. A vent operation of the battery cell 2 may be easily performed by the first space 5, such that the gas may be stably discharged.

The second space 6 may be formed between the case 4 and the housing 1, and may provide a space for discharging gas. If the case 4 is broken by the gas discharged from e.g. an explosion of the battery cell 2, the gas passing through the case 4 may flow into the second space 6.

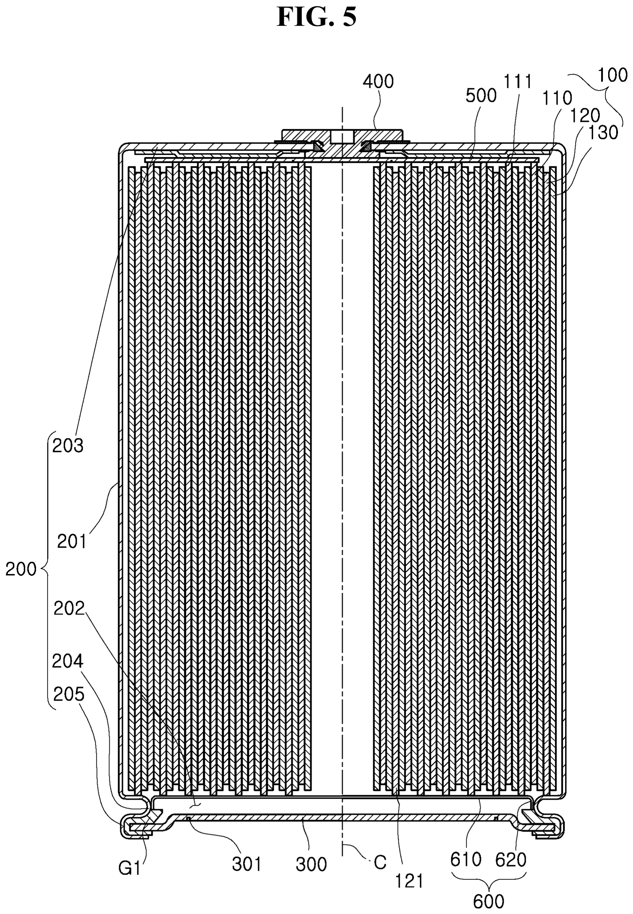

FIG. 4 is a perspective view schematically illustrating a battery cell 2 according to an embodiment of the present invention. FIG. 5 is a cross-sectional view schematically illustrating the battery cell 2 according to an embodiment of the present invention.

The battery cell 2 according to an embodiment may include an electrode assembly 100, a cell cover 200, a cap plate 300, and the terminal 400, and may further include a first current collecting member 500.

Herein, an example in which the battery cell 2 is a cylindrical lithium-ion secondary battery will be described. However, the present invention is not limited thereto, and the battery cell 2 may be a lithium polymer battery or a prismatic battery, for example.

The electrode assembly 100 may function as a unit structure which performs charging and discharging operations of power in the battery cell 2.

The electrode assembly 100 may include a first electrode plate 110, a second electrode plate 120, and a separator 130 disposed between the first electrode plate 110 and the second electrode plate 120.

In an embodiment, the electrode assembly 100 may have a shape that is wound around a winding axis C.

In an embodiment, the electrode assembly 100 may have a shape that is wound around the winding axis C clockwise or counterclockwise in a state in which the first electrode plate 110, the separator 130, and the second electrode plate 120 are stacked. Accordingly, the electrode assembly 100 may generally have a jelly roll shape. A cross-sectional shape of the electrode assembly 100 may have any of various shapes, such as an oval shape, a polygonal shape, and the like in addition to the circular shape. Here, the winding axis C may refer to a straight line passing through a center of the electrode assembly 100.

The first electrode plate 110 may function as a positive electrode of the electrode assembly 100. The first electrode plate 110 may have a form of a foil including a metal material, such as aluminum or an aluminum alloy. The type, size, shape, or the like of the first electrode plate 110 is not particularly limited as long as it has conductivity and does not cause a chemical change in the secondary battery.

At least a portion of the first electrode plate 110 may be coated with a first active material layer. Both, or opposite, surfaces of the first electrode plate 110 may be coated with the first active material layer, or only one surface of the first electrode plate 110 may be coated with the first active material layer.

In an embodiment, the first electrode plate 110 functions as a positive electrode, and the first active material layer may include a positive electrode active material.

The positive electrode active material may be a compound capable of reversible intercalation and deintercalation of lithium (lithiated intercalation compound). In an embodiment, one or more of composite oxides of lithium and a metal selected from cobalt, manganese, nickel, iron, and a combination thereof may be used.

In an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z=1 may be satisfied. In an embodiment, the positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM), and may include any two or all of lithium-iron-phosphorus oxide (LiFePO4, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer may further include a positive electrode conductive material.

The positive electrode conductive material imparts conductivity to the first active material layer and any suitable electrically conductive material that does not cause chemical changes may be used. Examples of the positive electrode conductive material may include a carbon-based material, such as natural graphite, artificial graphite, carbon black, acetylene black, Ketjen black, carbon fibers, carbon nanofibers, and carbon nanotubes, a metal-based material in the form of a metal powder or metal fiber containing copper, nickel, aluminum, silver, etc., a conductive polymer, such as a polyphenylene derivative, or a mixture thereof.

In an embodiment, the first active material layer may further include a positive electrode binder.

The positive electrode binder attaches particles constituting the positive electrode active material to each other well and also attaches the positive electrode active material to the first electrode plate 110 well.

An example of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

In an embodiment, the aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the positive electrode binder, a cellulose-based compound may be further contained to impart viscosity. This cellulose-based compound may be used by mixing one or more of carboxymethyl cellulose, hydroxypropyl methyl cellulose, methyl cellulose, or alkali metal salts thereof. In an embodiment, Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The first electrode plate 110 may include a first uncoated portion 111 on which the first active material layer is not applied. The first uncoated portion 111 may protrude by a distance (e.g., a predetermined distance) at an end portion of the electrode assembly 100 along the winding axis C.

The second electrode plate 120 may function as a negative electrode of the electrode assembly 100. The second electrode plate 120 may be formed to have a form of a foil including a metal material, such as copper, a copper alloy, nickel, or a nickel alloy. The second electrode plate 120 may be disposed to face the first electrode plate 110 at a distance (e.g., a predetermined distance) therefrom.

A type, size, shape, or the like of the second electrode plate 120 is not particularly limited as long as it has conductivity and does not cause a chemical change in the secondary battery.

At least a portion of the second electrode plate 120 may be coated with a second active material layer. Both, or opposite, surfaces of the second electrode plate 120 may be coated with the second active material layer, or only one surface of the second electrode plate 120 may be coated with the second active material layer.

In an embodiment, the second electrode plate 120 functions as a negative electrode, and the second active material layer may include a negative electrode active material.

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite, such as amorphous, plate-like, flaky, spherical, or fibrous natural graphite or artificial graphite, and examples of the amorphous carbon may include soft carbon or hard carbon, mesophase pitch carbide, calcined coke, and the like.

In an embodiment, an alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

In an embodiment, as the material capable of doping and dedoping lithium, a Si-based negative electrode active material or Sn-based negative electrode active material may be used. The Si-based negative electrode active material may include silicon, a silicon-carbon composite, SiOₓ (0<x≤2), a Si-Q alloy (where Q is selected from alkali metals, alkaline earth metals, group 13 elements, group 14 elements (excluding Si), group 15 elements, group 16 elements, transition metals, rare earth elements, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles such that, for example, the silicon primary particles may be coated with the amorphous carbon. The secondary particle may be present by being dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material.

The second active material layer may further include a negative electrode conductive material and a negative electrode binder.

The negative electrode conductive material imparts conductivity to the second active material layer, and any suitable electrically conductive material that does not cause chemical changes may be used. Examples of the positive electrode conductive material may include a carbon-based material, such as natural graphite, artificial graphite, carbon black, acetylene black, Ketjen black, carbon fibers, carbon nanofibers, and carbon nanotubes, a metal-based material in the form of a metal powder or metal fiber containing copper, nickel, aluminum, silver, etc., a conductive polymer, such as a polyphenylene derivative, or a mixture thereof.

The negative electrode binder attaches the negative electrode active material particles to each other well and also attaches the negative electrode active material to the second electrode plate 120 well.

An example of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the negative electrode binder, a cellulose-based compound may be further contained to impart viscosity. This cellulose-based compound may be used by mixing one or more of carboxymethyl cellulose, hydroxypropyl methyl cellulose, methyl cellulose, or alkali metal salts thereof. In an embodiment, Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The second electrode plate 120 may include a second uncoated portion 121 which is not coated with the second active material layer. The second uncoated portion 121 may protrude by a distance (e.g., a predetermined distance) from another end portion of the electrode assembly 100 located on an opposite side of the first uncoated portion 111 along the winding axis C.

The separator 130 may be disposed between the first electrode plate 110 and the second electrode plate 120. The separator 130 may prevent or substantially prevent a short circuit between the first electrode plate 110 and the second electrode plate 120 while allowing lithium ions to move between the first electrode plate 110 and the second electrode plate 120.

As the separator 130, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator 130 may include a porous substrate and a coating layer containing an organic material, an inorganic material, or a combination thereof located on one surface or both, or opposite, surfaces of the porous substrate.

The porous substrate may be a polymer film formed of a polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth) acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in a single coating layer or may be present in a form in which a coating layer including an organic material and a coating layer including an inorganic material are stacked.

In an embodiment, the separator 130 may be provided as a pair. The pair of separators 130 may be disposed to respectively face both, or opposite, surfaces of the first electrode plate 110 or the second electrode plate 120. The pair of separators 130 may be wound around the winding axis C together with the first electrode plate 110 and the second electrode plate 120.

The cell cover 200 may generally form an exterior of the battery cell 2 and accommodate the electrode assembly 100. In an embodiment, the cell cover 200 may be provided to be electrically conductive. For example, the cell cover 200 may include a material of at least one of steel, stainless steel, aluminum, and an aluminum alloy.

The cell cover 200 may include a can 201, an open portion 202, and a closed portion 203.

In an embodiment, the can 201 may have a cylindrical shape having a generally circular cross-section. A diameter of the can 201 may be greater than a diameter of the electrode assembly 100. A length of the can 201 parallel to the winding axis C of the electrode assembly 100 may be greater than a length of the electrode assembly 100.

The electrode assembly 100 may be accommodated in the can 201. In an embodiment, a central axis of the can 201 may be disposed to be coaxial with the winding axis C of the electrode assembly 100.

The open portion 202 and the closed portion 203 may be respectively disposed at both, or opposite, end portions of the can 201. The open portion 202 and the closed portion 203 may be disposed to be spaced apart from each other in a first direction. Herein, the first direction to be described below may refer to a direction from the open portion 202 toward the closed portion 203 based on FIG. 5 among directions parallel to the central axis of the can 201 and the winding axis C of the electrode assembly 100.

The open portion 202 according to an embodiment may be formed to have a shape of a hole passing through one end portion of the can 201. Both, or opposite, sides of the open portion 202 may be connected to the spaces inside and outside the can 201, respectively. During a manufacturing process of the battery cell 2, the electrode assembly 100 may be inserted into the can 201 through the open portion 202 together with an electrolyte.

The closed portion 203 according to an embodiment may be formed to have a shape of a disk disposed at another end portion of the can 201 spaced apart from the open portion 202 in the first direction. In an embodiment, an outer circumferential surface of the closed portion 203 may be integrally formed with an inner circumferential surface of the can 201 to seal another end portion of the can 201. For example, the can 201 and the closed portion 203 may be formed by a deep drawing process. In an embodiment, the closed portion 203 may be manufactured separately from the can 201, and the outer circumferential surface of the closed portion 203 may be joined to the inner circumferential surface of the can 201. A hole providing a path into which the terminal 400 to be described below is inserted may be formed in the central portion of the closed portion 203.

The first uncoated portion 111 of the electrode assembly 100 may be disposed to face the closed portion 203 inside the can 201. The second uncoated portion 121 of the electrode assembly 100 may be disposed to face the open portion 202 inside the can 201.

The cell cover 200 according to an embodiment may further include a beading portion 204.

The beading portion 204 may refer to a partial area of the can 201 protruding from the inner surface of the can 201 toward the central axis of the can 201 among an entire area of the can 201. The beading portion 204 may be formed by pressing the outer surface of the can 201 on a side adjacent to the open portion 202. The beading portion 204 may be in contact with the end portion of the electrode assembly 100 from which the second uncoated portion 121 protrudes. Accordingly, the beading portion 204 may suppress the electrode assembly 100 from moving or being separated from the inside of the can 201.

The cap plate 300 may be configured to seal the open portion 202 of the cell cover 200.

The cap plate 300 according to an embodiment may be formed to have a generally disk shape. The cap plate 300 may be disposed inside the can 201. The cap plate 300 may be disposed inside the can 201 to face the other end portion of the electrode assembly 100 with the beading portion 204 interposed therebetween. A surface of the cap plate 300 may be seated on the beading portion 204. Another surface of the cap plate 300 may be disposed to face the space outside the can 201.

A crimping portion 205 for fixing the cap plate 300 may be formed at an end portion of the can 201 in which the open portion 202 is formed. The crimping portion 205 according to an embodiment may be bent from an end portion of the can 201 and disposed to face the surface of the cap plate 300 disposed to face the space outside the can 201.

In an embodiment, a cap gasket G1 for electrically insulating the cap plate 300 and the cell cover 200 may be disposed between the cap plate 300 and the crimping portion 205.

The cap gasket G1 according to an embodiment may be disposed to cover (e.g., entirely cover) the end portion of the cap plate 300. An outer surface of the cap gasket G1 may be pressed and fixed to an inner surface of the beading portion 204 and the crimping portion 205. The cap gasket G1 may be formed of an insulating material, such as rubber, polyethylene (PE), polypropylene (PP), polyethylene terephthalate (PET), or the like. Accordingly, the cap gasket G1 may electrically insulate the cap plate 300 and the cell cover 200 and block moisture, foreign materials, and the like from being introduced between the cap plate 300 and the cell cover 200.

The crimping portion 205 may be disposed to face another surface of the cap plate 300 with the cap gasket G1 interposed therebetween, and may be in contact with the cap gasket G1 to press the cap plate 300 toward the beading portion 204. Accordingly, the cap plate 300 may be stably fixed at the side of the open portion 202 of the cell cover 200.

In an embodiment, the cap plate 300 may be formed of a metal material to provide mechanical rigidity and, in an embodiment, may be formed of a synthetic resin material that does not have electrical conductivity.

The cap plate 300 may be provided with a vent 301 configured to open as an internal pressure of the can 201 exceeds a certain (e.g., predetermined) pressure.

A thickness of the vent 301 according to an embodiment may be smaller than those of other areas of the cap plate 300. For example, the vent 301 may have a shape of a notch formed to be concave from one of both, or opposite, surfaces of the cap plate 300 toward the other surface. The vent 301 may be spaced apart from the center of the cap plate 300 and may have a ring shape that is concentric with the cap plate 300. As another example, the vent 301 may have at least one pattern having a straight or curved shape.

The terminal 400 may be coupled to the cell cover 200 and electrically connected to the electrode assembly 100 by the first current collecting member 500 to be described below. The terminal 400 may be formed of a metal material having electrical conductivity, for example, a material such as aluminum, nickel, copper, etc.

In an embodiment, the terminal 400 may function as a positive electrode terminal of the battery cell 2 as the terminal 400 is electrically connected to the first electrode plate 110 of the electrode assembly 100 by the first current collecting member 500. However, the terminal 400 is not limited thereto, and may function as a negative electrode terminal by being electrically connected to the second electrode plate 120.

The terminal 400 according to an embodiment may pass through the closed portion 203 of the cell cover 200 in the first direction. In an embodiment, the terminal 400 may be inserted into the cell cover 200 through the hole formed in the central portion of the closed portion 203. The outer circumferential surface of the terminal 400 may be disposed to be spaced by a distance (e.g., a predetermined distance) apart from the inner circumferential surface of the hole formed in the central portion of the closed portion 203. Both, or opposite, end portions of the terminal 400 may be respectively disposed in the spaces inside and outside the can 201.

In an embodiment, the terminal 400 disposed in the space inside and outside the can 201 may be plastically deformed during compression and welding, and may be disposed to be in contact (e.g., close contact) with the outer and inner surfaces of the closed portion 203. Accordingly, the terminal 400 may be stably fixed to the cell cover 200 while passing through the closed portion 203.

A second current collecting member 600 may be disposed between the electrode assembly 100 and the cap plate 300, and may be connected to the electrode assembly 100. The second current collecting member 600 may be formed of a metal material having electrical conductivity, for example, a material such as aluminum, nickel, copper, etc.

The second current collecting member 600 according to an embodiment may include a flat surface portion 610 facing the surface of the electrode assembly 100 from which the second uncoated portion 121 protrudes, and an extension portion 620 extending from the flat surface portion 610.

A surface of the flat surface portion 610 facing the other surface of the electrode assembly 100 may be connected to the second uncoated portion 121. Accordingly, in an embodiment, the second current collecting member 600 may function as a negative electrode current collecting plate. An end portion of the second uncoated portion 121 may be bent in a direction parallel to the flat surface portion 610 and may be connected to a surface of the flat surface portion 610 by welding or the like. A bending direction of the second uncoated portion 121 may be a direction toward the winding axis C of the electrode assembly 100.

The extension portion 620 may extend from an edge of the flat surface portion 610 toward the cap plate 300. The extension portion 620 may be in contact with the inner surface of the beading portion 204. The extension portion 620 may be rounded or bent along the beading portion 204. The extension portion 620 may be connected to the beading portion 204 by welding or the like. Accordingly, the cell cover 200 and the second electrode plate 120 may be electrically connected to each other and the closed portion 203 may function as a negative electrode terminal.

In an embodiment, a plurality of extension portions 620 may be formed. The plurality of extension portions 620 may be disposed to be spaced apart from each other along the edge of the flat surface portion 610.

However, the battery cell 2 according to the present invention is not limited thereto, and the second uncoated portion 121 of the electrode assembly 100 may be directly connected to the cap plate 300.

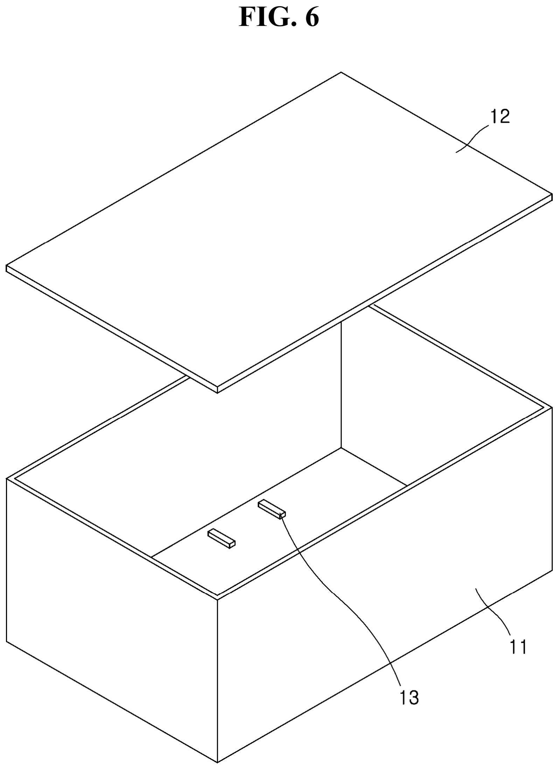

FIG. 6 is a view schematically showing a housing 1 according to an embodiment of the present invention. Referring to FIG. 6, the housing 1 according to an embodiment of the present invention may include a housing body 11, a housing cover 12, and a housing frame 13.

The housing body 11 may be formed to have a shape of a box with an empty interior and an open side. However, a cross-sectional shape of the housing body 11 is not limited to the rectangular shape illustrated in FIGS. 1 and 6, and may have any of various shapes, such as any of a polygonal shape, a circular shape, an oval shape, and the like.

The housing cover 12 may be coupled to the housing body 11 and close the inner space of the housing body 11. In an example, the housing cover 12 may be formed to have a generally plate shape and may be disposed to face the open side of the housing body 11. The housing cover 12 may be fixed to the housing body 11 by any of various types of coupling methods, such as any of bolting, welding, fitting, etc.

The housing frame 13 is formed on the housing body 11 and may induce the mounting of the case 4. The case 4 may be manufactured to have any of various shapes according to a size and arrangement state of the battery cell 2 and may be seated on the housing body 11. In an embodiment, the case 4 may be press-fitted or fixed to the housing frame 13. In an embodiment, through any of various coupling methods, the case 4 may be fixedly coupled to the inside of the housing body 11 through the housing frame 13. The housing frame 13 may have a protrusion shape protruding from the housing body 11. A plurality of housing frames 13 may be disposed on the housing body 11 such that the mounting position of the case 4 may be changed according to a size and shape of the battery cell 2, and the case 4 may be selectively mounted on the housing frame 13.

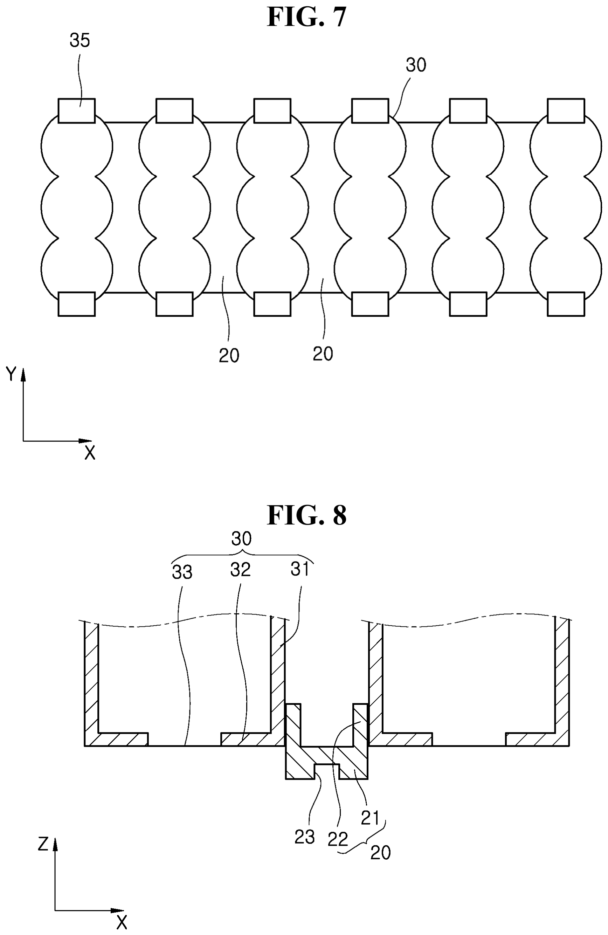

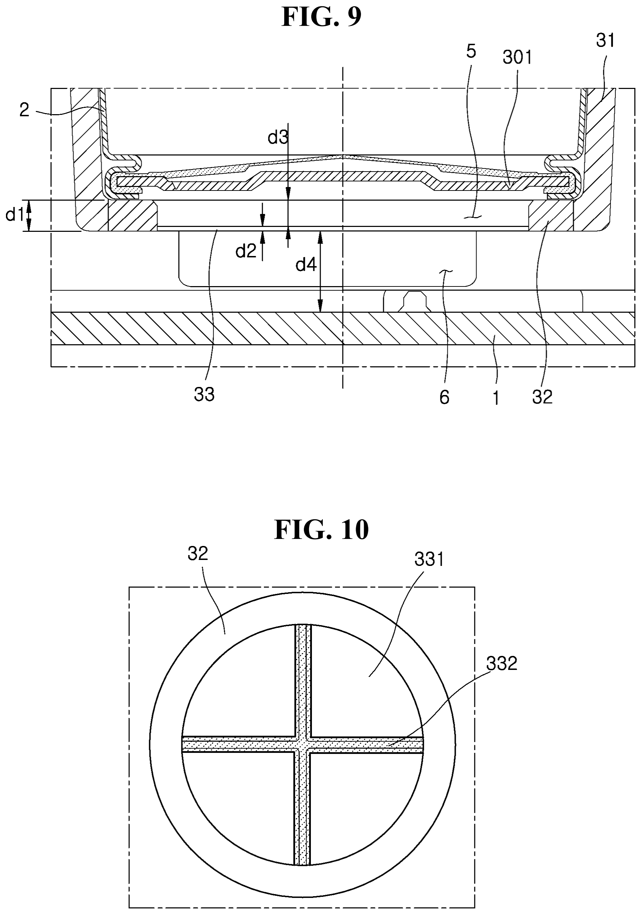

FIG. 7 is a plan view schematically illustrating a case 4 according to an embodiment of the present invention. FIG. 8 is a cross-sectional view schematically illustrating the case 4 according to an embodiment of the present invention. FIG. 9 is an enlarged view of a main part of the case 4 according to an embodiment of the present invention. Referring to FIGS. 7 to 9, the case 4 according to an embodiment of the present invention may include a case base part 20 and a case support part 30. The case base part 20 and the case support part 30 may be formed of an insulating material.

The case base part 20 may be supported by the housing 1. The case base part 20 may be fitted and coupled to the housing frame 13.

The case support part 30 may be connected to the case base part 20 and may support the plurality of battery cells 2. In an embodiment, the case support part 30 may be integrally formed with the case base part 20. The case base part 20 may be disposed between the case support parts 30. The case support part 30 may support the battery cells 2 disposed in a row or a plurality of rows.

The case base part 20 may include a base seating portion 21 and a base protrusion 22.

The base seating portion 21 may be seated on the housing 1. A seating groove 23 is formed in a lower portion of the base seating portion 21, and the housing frame 13 is inserted into the seating groove 23 to maintain a stably fixed state of the base seating portion 21.

The base protrusion 22 may protrude from the base seating portion 21 in a fourth direction. The fourth direction may be a Z-axis direction. The base seating portion 21 may have a width in the second direction, that is, an X-axis direction, and may have a length in a third direction, that is, a Y-axis direction. The base protrusion 22 may have a length in the Z-axis direction on both left and right sides of the base seating portion 21. In addition, the base protrusion 22 may have a length in an oblique direction, the oblique direction is a direction inclined with respect to the Z-axis direction. The base protrusion 22 may be connected to the case support part 30 to support the case support part 30.

The case support part 30 may include a support side cover 31, a support protrusion 32, and a support plate 33.

The support side cover 31 may be connected to the case base part 20, and may surround the battery cells 2 in a row. A pair of support side covers 31 may be disposed to face each other, and the battery cells 2 may be disposed in a row between the pair of support side covers 31. The battery cells 2 may be disposed in a plurality of rows between the pair of support side covers 31 according to an embodiment. Each of the support side covers 31 may be disposed on the base protrusions 22 disposed on both, or opposite, sides of the base seating portion 21.

The support side cover 31 may be connected to the facing support side cover 31, at the edge of the housing body 11. That is, the pair of support side covers 31 facing each other are disposed in a row in the second direction, that is, the X-axis direction, and a support connection part 35 is formed at an end portion of the support side cover 31 in the Y-axis direction, to restrain a portion of the support side cover 31 not connected to the case base part 20 and to support the battery cell 2. A part of a space in which the support connection part 35 is disposed may be open to allow a gas discharged between the support side covers 31 to pass therethrough. The pair of support side covers 31 may have a cross-section in which a shape of the number 8 is connected in the Y-axis direction. In this case, an intermediate area of the shape of the number 8 may be removed to accommodate the battery cell 2.

The support protrusion 32 may be connected to the support side cover 31 and may support a lower portion of the battery cell 2. The support protrusion 32 may directly support a bottom edge of the battery cell 2, and the support plate 33 coupled to the support protrusion 32 may support the battery cell 2.

The support plate 33 may be coupled to the support protrusion 32 and spaced apart from the battery cell 2, and may be broken to discharge gas discharged from the battery cell 2. A thickness d1 of the support protrusion 32 may be greater than a thickness d2 of the support plate 33. The support plate 33 may be disposed at a low point of the support protrusion 32. The support plate 33 may be spaced apart from the battery cell 2 by a difference between the thickness d1 of the support protrusion 32 and the thickness d2 of the support plate 33.

The vent 301 of the battery cell 2 may be disposed inside the support protrusion 32. That is, the battery cell 2 may be disposed inside the support protrusion 32, and the support plate 33 may be disposed to face the vent 301 of the battery cell 2.

The thickness d1 of the support protrusion 32 is greater than a thickness d3 of the first space 5. A difference between the thickness d1 of the support protrusion 32 and the thickness d2 of the support plate 33 may be the thickness d3 of the first space 5. In an embodiment, the thickness d3 of the first space 5 may be smaller than a thickness d4 of the second space 6.

The support protrusion 32 may support the plurality of battery cells 2 in a row. In this case, the support protrusion 32 may directly support the edge of the battery cell 2, and the support plate 33 may be combined with the inside of the support protrusion 32 to allow gas discharge.

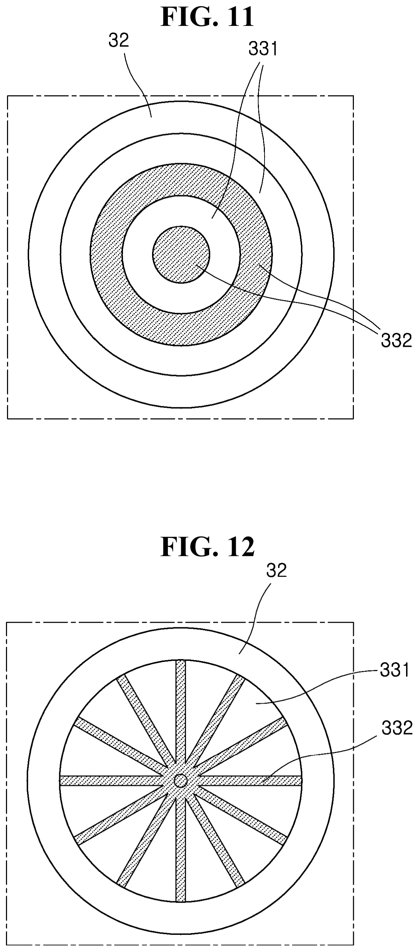

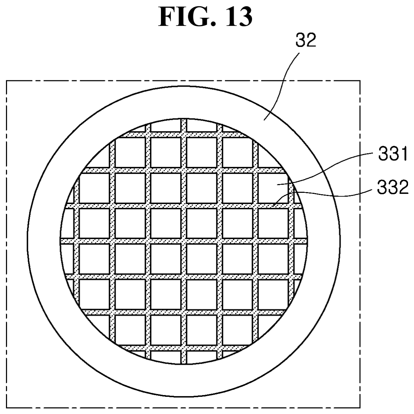

FIG. 10 is a plan view schematically illustrating a support plate 33 according to an embodiment of the present invention. FIG. 11 is a plan view schematically illustrating a support plate 33 according to another embodiment of the present invention. FIG. 12 is a plan view schematically illustrating a support plate 33 according to another embodiment of the present invention. FIG. 13 is a plan view schematically illustrating a support plate according to another embodiment of the present invention.

Referring to FIGS. 10 to 13, the support plate 33 may include a plate cover portion 331 and a plate vent portion 332.

The plate cover portion 331 may be coupled to the support protrusion 32 and may cover an open area inside the support protrusion 32. A thickness of the plate cover portion 331 may correspond to a thickness of the support protrusion 32. In an embodiment, the thickness of the plate cover portion 331 may be smaller than the thickness of the support protrusion 32.

The plate vent portion 332 may be formed in the plate cover portion 331, disposed in a gas discharge area of the battery cell 2, and configured to be broken by gas pressure to discharge a gas. In an embodiment, the thickness of the plate vent portion 332 may be smaller than the thickness of the plate cover portion 331.

The plate cover portion 331 and the plate vent portion 332 may be disposed in the gas discharge area of the battery cell 2, and the plate cover portion 331 may be deformed due to fracture of the plate vent portion 332, thereby allowing gas to be easily discharged. The support plate 33 may cover an inner side of the support protrusion 32, and each support protrusion 32 may support the edge of the battery cell 2.

As shown in FIG. 10, in an embodiment of the support plate 33, the plate cover portion 331 may have a circular cross-section, and the plate vent portion 332 may have a cross shape inside the plate cover portion 331. Both, or opposite, end portions of the plate vent portion 332 may be coupled to the support protrusion 32 (see FIG. 10).

As shown in FIG. 11, in an embodiment of the support plate 33, the plate cover portion 331 may have a circular cross-section, and the plate vent portion 332 may have a concentric circle shape inside the plate cover portion 331. Two or more plate vent portions 332 may be disposed inside the plate cover portion 331 (see FIG. 11).

As shown in FIG. 12, in another embodiment of the support plate 33, the plate cover portion 331 may have a circular cross-section, and the plate vent portion 332 may have a spoke shape inside the plate cover portion 331. Both, or opposite, end portions of the plate vent portion 332 may be coupled to the plate cover portion 331 (see FIG. 12).

As shown in FIG. 13, in another embodiment of the support plate 33, the plate cover portion 331 may have a circular cross-section, and the plate vent portion 332 may have a grid pattern shape inside the plate cover portion 331. Both, or opposite, end portions of the plate vent portion 332 may be coupled to the plate cover portion 331 (see FIG. 13).

That is, the plate vent portion 332 may be formed in any of a cross shape, a concentric circle shape, a spoke shape, and a grid pattern shape.

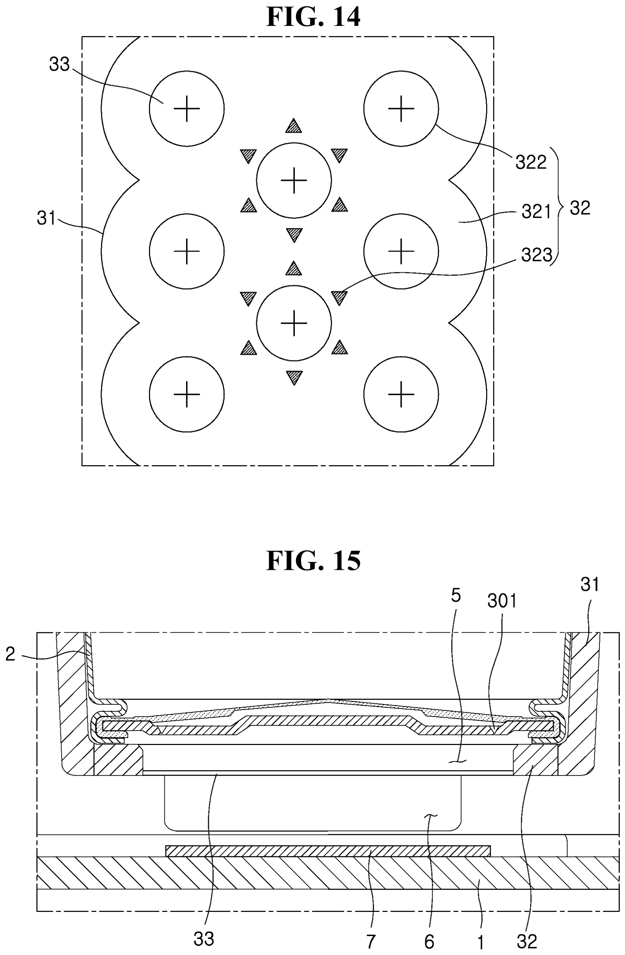

FIG. 14 is a view schematically illustrating a support protrusion 32 according to another embodiment of the present invention. Referring to FIG. 14, the support protrusion 32 may include a protrusion plate 321 and a protrusion ring 322. The battery cells 2 may be disposed in a plurality of rows on the support protrusion 32.

The protrusion plate 321 may be connected to the support side cover 31. Lower portions of the support side covers 31 facing each other may be maintained in a connected state with each other by the protrusion plate 321. A thickness of the protrusion plate 321 may have a thickness capable of supporting the load of a plurality of battery cells 2 disposed in a plurality of rows.

The protrusion ring 322 may be formed on the protrusion plate 321, and the support plate 33 may be provided inside the protrusion ring 322. The protrusion rings 322 may support lower edges of the battery cells 2 disposed in a plurality of rows. The thickness of the protrusion ring 322 may correspond to the thickness of the protrusion plate 321.

The support protrusion 32 may further include a protrusion groove 323. The protrusion groove 323 may be formed in the protrusion plate 321, one or more protrusion grooves 323 may be disposed along a circumference of the protrusion ring 322, and configured to allow gas to flow in and out. The protrusion groove 323 may be broken by gas pressure to form a through hole. A thickness of the protrusion groove 323 may be smaller than the thickness of the protrusion plate 321. The thickness of the protrusion groove 323 may correspond to the thickness of the plate vent portion 332 in FIGS. 10 to 13.

In an embodiment, the protrusion groove 323 may be disposed within a range of 45 to 360 degrees in a circumferential direction along the circumference of the protrusion ring 322. That is, the protrusion groove 323 may be disposed as at least one eighth of a ring. In an embodiment, the protrusion groove 323 may have a circular or polygonal shape and may be disposed to surround each protrusion ring 322.

If an internal gas of the battery cell 2 expands and is discharged, the support plate 33 is primarily broken by the gas pressure, allowing the gas to be discharged smoothly. If the gas pressure inside the first space 5 rises by discharging gas from the plurality of battery cells 2, the protrusion groove 323 may be broken to suppress an increase in gas pressure.

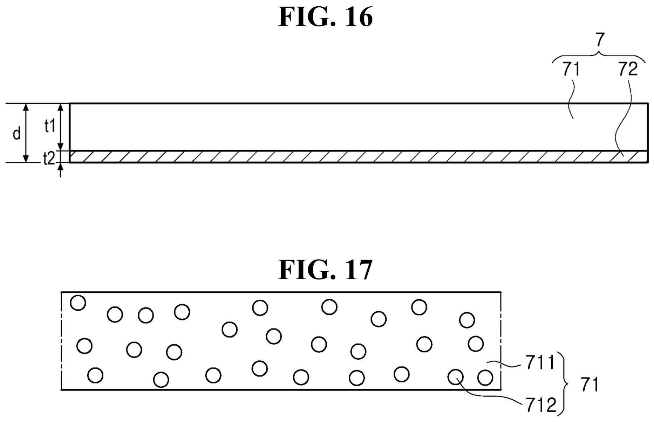

FIG. 15 is a view schematically illustrating a state in which a fire extinguishing part 7 is disposed according to an embodiment of the present invention. FIG. 16 is a side view schematically illustrating the fire extinguishing part 7 according to an embodiment of the present invention. FIG. 17 is a view schematically illustrating a fire extinguishing sheet 71 according to an embodiment of the present invention. Referring to FIGS. 15 to 17, the battery pack according to an embodiment of the present invention may further include the fire extinguishing part 7.

The fire extinguishing part 7 may be disposed in at least one of the first space 5 and the second space 6, and may suppress ignition of the battery cell 2.

The fire extinguishing part 7 may include a fire extinguishing sheet 71 and a fire extinguishing tape 72.

The fire extinguishing sheet 71 includes a fire extinguishing agent, and the fire extinguishing tape 72 formed on the fire extinguishing sheet 71 may be attached and fixed to at least one of the support plate 33 and the housing 1. In an embodiment, the fire extinguishing sheet 71 may be laminated on the fire extinguishing tape 72. In an embodiment, the fire extinguishing tape 72 may be coated with an adhesive to be attached to at least one of the support plate 33 and the housing 1.

In an embodiment, the fire extinguishing sheet 71 may include a sheet body 711 and a sheet capsule 712.

The fire extinguishing tape 72 may be coupled to the sheet body 711. In an embodiment, a plurality of sheet capsules 712 may be included in the sheet body 711. In an embodiment, the sheet capsule 712 is a spherical capsule, and a fire extinguishing agent may be stored in the capsule.

The sheet body 711 may be formed by mixing an epoxy with an additive. In this case, a curing agent that cures the epoxy to induce the sheet capsule 712 to be evenly disposed may be used as an additive.

The epoxy, the additive, and the sheet capsule 712 may be stirred to prepare a mixture, and then the mixture may be put into a molding mold and allowed to stand. After a certain period of time, the epoxy is cured, and the sheet capsule 712 is evenly distributed inside the epoxy.

In an embodiment, a content ratio of the sheet capsule 712 may be 30% to 50%. That is, a volume of the sheet capsule 712 embedded in the sheet body 711 may be 30% to 50% of the total volume of the sheet body 711. In an embodiment, the volume of the sheet capsule 712 may be 30% to 50% of the volume of the epoxy and the additive.

In an embodiment, a thickness t1 of the fire extinguishing sheet 71 may be 5 to 15 times a thickness t2 of the fire extinguishing tape 72. That is, if the thickness t2 of the fire extinguishing tape 72 is 1 mm, the thickness t1 of the fire extinguishing sheet 71 may be 5 mm to 15 mm.

In an embodiment, a width d of the fire extinguishing part 7 may be in a range of 5 mm to 30 mm. If the width d of the fire extinguishing part 7 is less than 5 mm, it may be difficult for the sheet capsule 712 to enter.

A gas discharging process of the battery pack according to an embodiment of the present invention having the above-described structure will be described below.

The case 4 is mounted on the housing 1, and the battery cells 2 are disposed in a row or in a plurality of rows according to the shape of the case 4. In this case, the vent 301 of the battery cell 2 is disposed to face the case 4.

The case 4 includes the case base part 20 mounted on the housing 1 and the case support part 30 supporting the battery cell 2, and the support plate 33 provided in the case support part 30 is spaced apart from the battery cell 2 to form the first space 5. The case support part 30 and the housing 1 are spaced apart to form the second space 6.

If the internal gas of the battery cell 2 expands in the above-described state, the vent 301 of the battery cell 2 ruptures, and the gas is discharged to the outside. Since the first space 5 is formed between the battery cell 2 and the case support part 30, when the internal gas of the battery cell 2 expands, the vent 301 is easily broken.

If the support plate 33 is broken by the gas discharged from the battery cell 2, the gas moves to the case base part 20 to alleviate gas pressure.

The fire extinguishing part 7 is disposed in at least one of the first space 5 and the second space 6, and, if the temperature increases, the fire extinguishing agent may be discharged to prevent or substantially prevent a fire from occurring due to high temperatures.

In the battery pack according to one or more embodiments of the present invention, the first space 5 is formed between the battery cell 2 and the case 4, the second space 6 is formed between the case 4 and the housing 1, and the case 4 is broken by the gas pressure of the battery cell 2 to stably discharge gas.

In the battery pack according to one or more embodiments of the present invention, the fire extinguishing part 7 is disposed in at least one of the first space 5 and the second space 6, and rapid extinguishment may thereby be provided if the battery cell 2 ignites.

According to another aspect of embodiments of the present disclosure, a battery pack having an improved structure, and a vehicle including the same, are provided.

However, aspects and technical effects acquirable through the present disclosure are not limited to the above-described aspects and technical effects, and other aspects and technical effects which are not mentioned will be clearly understood by those skilled in the art from the description of the invention described below.

Although the present disclosure has been described with reference to the embodiments shown in the drawings, these are merely examples, and it is to be understood by those skilled in the art that various modifications and equivalents are possible.

Accordingly, the technical scope of the present disclosure should be defined by the claims.

## Claims

1. A battery pack comprising:
a housing;
a plurality of battery cells accommodated in the housing;
a bus bar electrically connecting the plurality of battery cells;
a case mounted on the housing and supporting a battery cell of the plurality of battery cells;
a first space between the battery cell and the case and which provides a space to discharge a gas; and
a second space between the case and the housing.

2. The battery pack as claimed in claim 1, wherein the housing comprises:
a housing body;
a housing cover covering an open portion of the housing body; and
a housing frame on the housing body to induce mounting of the case.

3. The battery pack as claimed in claim 1 or 2, wherein the case comprises:
a case base part supported by the housing; and
a case support part connected to the case base part and supporting battery cell.

4. The battery pack as claimed in claim 3, wherein the case base part comprises:
a base seating portion seated on the housing; and
a base protrusion protruding from the base seating portion in a first direction.

5. The battery pack as claimed in claim 3 or 4, wherein the case support part comprises:
a support side cover connected to the case base part and covering the battery cells in a row;
a support protrusion connected to the support side cover and supporting a lower portion of the battery cell; and
a support plate that is coupled to the support protrusion, spaced apart from the battery cell, and breakable to discharge a gas discharged from the battery cell.

6. The battery pack as claimed in claim 5, wherein a vent of the battery cell is located inside the support protrusion.

7. The battery pack as claimed in claim 5 or 6, wherein a thickness (d1) of the support protrusion is greater than a distance (d3) of the first space.

8. The battery pack as claimed in claim 5, 6 or 7, wherein the support protrusion supports the plurality of battery cells in a row.

9. The battery pack as claimed in any one of claims 5 to 8, wherein the support protrusion comprises:
a protrusion plate connected to the support side cover; and
a protrusion ring arranged on the protrusion plate, with the support plate located inside, and supporting a lower portion of each of the battery cells in a plurality of rows.

10. The battery pack as claimed in claim 9, wherein the support protrusion further comprises one or more protrusion grooves in the protrusion plate, arranged along a circumference of the protrusion ring, and configured to allow a gas to flow in and out.

11. The battery pack as claimed in any one of claims 5 to 10, wherein the support plate comprises:
a plate cover portion coupled to the support protrusion and spaced apart from the battery cell; and
a plate vent portion in the plate cover portion, located in a gas discharge area of the battery cell, and configured to be broken by gas pressure to discharge the gas.

12. The battery pack as claimed in claim 11, wherein a thickness of the plate cover portion is greater than a thickness of the plate vent portion.

13. The battery pack as claimed in any preceding claim, further comprising a fire extinguishing part in at least one of the first space and the second space and configured to suppress ignition of the battery cell.

14. The battery pack as claimed in claim 13, wherein the fire extinguishing part comprises:
a fire extinguishing sheet comprising a fire extinguishing agent therein; and
a fire extinguishing tape on the fire extinguishing sheet.

15. The battery pack as claimed in claim 14, wherein the fire extinguishing sheet comprises:
a sheet body to which the fire extinguishing tape is attached; and
a plurality of sheet capsules embedded in the sheet body and comprising the fire extinguishing agent.
